# EUROPÄISCHE PATENTSCHRIFT

(11) **EP 3 182 559 B1**
(45) Veröffentlichungstag und Bekanntmachung des Hinweises auf die Patenterteilung: **31.01.2018**
(21) Anmeldenummer: 15199807.7
(22) Anmeldetag: 14.12.2015
(51) Int. Cl.: H02K 5/15, H02K 15/16, H02K 7/09, H02K 5/24

(54) **ROTORAUSRICHTUNG ZUR REDUKTION VON SCHWINGUNGEN UND GERÄUSCHEN**
ROTOR ALIGNMENT FOR REDUCING VIBRATIONS AND NOISES
ALIGNEMENT DE ROTOR DESTINÉ À RÉDUIRE LES VIBRATIONS ET LES BRUITS

(43) Veröffentlichungstag der Anmeldung: 21.06.2017
(73) Patentinhaber: Siemens Aktiengesellschaft, 80333 München (DE)
(72) Erfinder: Büttner, Klaus, 97618 Hollstadt (DE); Kirchner, Klaus, 97645 Ostheim (DE); Warmuth, Matthias, 97618 Windshausen (DE); Wöhner, Norbert, 97618 Heustreu (DE)

(56) Entgegenhaltungen:
- DE-A1-102010 043 042
- DE-T2- 60 210 482

## Beschreibung

Die folgende Erfindung betrifft ein Verfahren zum Montieren eines Rotors in einem Stator einer elektrischen Maschine, wobei der Rotor in mindestens einem Wälzlager gelagert ist, welches seinerseits an einem Lagerschild befestigt ist. Darüber hinaus betrifft die vorliegende Erfindung ein Montagesystem zum Montieren eines solchen Rotors in einem Stator.

Elektromotoren, insbesondere in der Synchron-Reluktanztechnik, sind im Betrieb häufig aufgrund von Unsymmetrien mit Schwingungen und Geräuschen behaftet. Solche Schwingungen und Geräusche sind in der Regel für den Einsatzzweck, aber auch das Bedienpersonal störend. Daher ist man bestrebt, solche Schwingungen und Geräusche zu reduzieren. Es sind aber nicht nur Elektromotoren, sondern unter Umständen auch Generatoren von Unsymmetrien betroffen. Auch hier ist man gegebenenfalls bestrebt, entsprechende Schwingungen und Geräusche zu minimieren.

Die Ursachen dieser Unsymmetrien kommen zum einen aus Fertigungsungenauigkeiten. Hierzu zählen beispielsweise Form- und Lagetoleranzen von Stator- und Rotorblechen. Weitere Ungenauigkeiten können allgemein von Bauteilen wie Gehäuse, Stator, Lagerschild, Lager und Rotor der elektrischen Maschine stammen. Unter Umständen summieren sich die Ungenauigkeiten, wenn der Rotor in dem Stator montiert wird.

Bei der Montage eines Rotors in einem Stator werden meist Zentrierungen genutzt. Mit ihnen erfolgt eine radiale Festlegung des Rotors gegenüber dem Stator. Die beiden Bauteile, Gehäuse und Lagerschilde sind dabei in der Regel mit engen Passungen an den Zentrierrändern versehen. Dadurch ergibt sich nur eine einzige festgelegte Position des Rotors zum Stator.

Unsymmetrien können sich aber auch aus dem Material selbst ergeben. Beispielsweise hängen die magnetischen Eigenschaften von Elektroblech von der Walzrichtung ab. Allein durch diese minimalen magnetischen Unterschiede können sich bei Betrieb der elektrischen Maschine deutliche kraftmäßige Unsymmetrien ergeben.

Die reinen Materialeigenschaften werden typischerweise bei idealer Ausrichtung der Rotorachse nicht berücksichtigt. Motoren in der Synchron-Reluktanztechnik werden üblicherweise mit einem kleineren Luftspalt als Asynchronmotoren gebaut. Dies hängt damit zusammen, dass bei kleinerem Luftspalt eine bessere Unterscheidung der d- und q-Achse gegeben ist und auch der Wirkungsgrad gesteigert werden kann. Gleichzeitig erhöht sich jedoch die Anfälligkeit bezüglich Schwingungen, die ihren Ursprung in der Elektromagnetik haben.

Aus der Druckschrift DE 196 19 997 A1 ist die Bestimmung einer Unwucht eines magnetisch gelagerten Rotors bekannt. Durch Verschieben einer Permanentlagerung des Rotors wird eine Unwucht kompensiert. Dabei erfolgt eine Verschiebung in die Trägheitsachse, d.h. ein Ausgleich einer Unwucht erster Ordnung.

Darüber hinaus zeigt auch die Druckschrift DE 37 42 149 A1 einen Ausgleich von Unwucht eines rotierenden Körpers. Dabei wird ein konkretes Beispiel angegeben, wie ein solcher Ausgleich erfolgen kann.

Des Weiteren offenbart die Druckschrift DE 602 10 482 T2 eine Rotor-Magnetlagerung. Dort soll ebenfalls eine Unwucht ausgeglichen werden.

Ferner offenbart die Druckschrift DE 19 41 558 A1 ein Verfahren zum geometrischen Ausrichten eines Rotors gegenüber einem Stator bei der Montage. Das Ausrichten erfolgt hier statisch.

Ein weiteres Verfahren zur Ausrichtung eines Rotors gegenüber einem Stator wird von der Druckschrift DE 10 2010 043042 A1 offenbart.

Die Aufgabe der vorliegenden Erfindung besteht somit darin, beim Ausrichten eines Rotors in einem Stator auch unsymmetrische magnetische Kräfte berücksichtigen zu können. Dementsprechend soll ein Verfahren zum Montieren eines Rotors beziehungsweise ein Montagesystem zum Montieren eines Rotors in einem Stator vorgeschlagen werden.

Erfindungsgemäß wird diese Aufgabe gelöst durch ein Verfahren nach Anspruch 1 sowie ein Montagesystem nach Anspruch 8. Vorteilhafte Weiterbildungen der Erfindung ergeben sich aus den Unteransprüchen.

Erfindungsgemäß wird demnach bereitgestellt ein Verfahren zum Montieren eines Rotors in einem Stator einer elektrischen Maschine, wobei der Rotor in mindestens einem Wälzlager gelagert ist, welches seinerseits an einem Lagerschild befestigt ist, durch
- Lagern des Rotors in einer magnetischen Ausrichteinrichtung, während das Lagerschild lose mit dem Stator verbunden ist,
- Antreiben des Rotors durch den Stator,
- Detektieren von ersten Schwingungen des Rotors,
- Regeln der Ausrichteinrichtung derart, dass die Schwingungen reduziert werden, und
- Fixieren des Lagerschilds an dem Stator in einer durch das Regeln ermittelten Position.

Es wird demnach eine elektrische Maschine montiert, bei der der Rotor im späteren Betrieb durch ein Wälzlager im/am Stator gelagert ist. Das Wälzlager selbst ist an oder in einem Lagerschild befestigt. Am Ende der Montage soll dann das Lagerschild mittelbar oder unmittelbar fest an dem Stator befestigt werden. Um hierfür jedoch die richtige Position zu finden, wird zunächst der Rotor in einer magnetischen Ausrichteinrichtung gelagert, und das Lagerschild ist dabei noch lose gegenüber dem Stator. Dies bedeutet, dass das Lagerschild einschließlich des Wälzlagers und des Rotors insbesondere radial verschiebbar ist. Zum Ausrichten wird nun der Rotor in Drehung versetzt, und zwar durch den Stator, der auch im Betrieb entsprechende Kräfte auf den Rotor ausübt. Es stellen sich dabei also realistische Kräfte ein, die auch während des Rotorbetriebs auftreten. Diesbezügliche Schwingungen (beispielsweise in Form von Kräften oder Auslenkungen über der Zeit) des Rotors werden detektiert, die sich aus unsymmetrischen Formgebungen oder Krafteinwirkungen ergeben. Die magnetische Ausrichteinrichtung wird nun so geregelt, dass die Schwingungen reduziert werden. Vorzugsweise werden die Schwingungen durch das Regeln sogar minimiert oder eliminiert. In diesem Zustand, dass die Schwingungen reduziert, minimiert oder eliminiert sind, wird nun das Lagerschild an dem Stator mittelbar oder unmittelbar befestigt. Damit erhält man eine Ausrichtung des Rotors in dem Stator, bei dem die Schwingungen und damit auch die Geräusche reduziert sind. Vorzugsweise wird bei diesem Ausrichten der Rotor so angetrieben, wie er im vorgesehenen Normalbetrieb auch angetrieben wird, insbesondere hinsichtlich der Drehzahl.

Bei einer vorteilhaften Weiterbildung werden zweite Schwingungen eines Gehäuses der elektrischen Maschine detektiert, die ebenfalls bei dem Regeln der Ausrichteinrichtung berücksichtigt werden. Es gehen hier also in die Regelung nicht nur die ersten Schwingungen ein, die hinsichtlich des Rotors detektiert wurden, sondern auch Schwingungen hinsichtlich des Gehäuses. Analog hierzu könnten für die Regelung auch andere Komponenten der elektrischen Maschine, wie etwa der Stator oder ein Montagefuß hinsichtlich seiner Schwingungen beim Regeln berücksichtigt werden.

Die elektrische Maschine kann so ausgebildet sein, dass das Lagerschild über ein Gehäuse der elektrischen Maschine an dem Stator fixiert wird. Die elektrische Maschine besitzt also explizit ein Gehäuse, an dem das Lagerschild befestigt wird. Das Gehäuse seinerseits ist typischerweise mit dem Stator starr verbunden. Dadurch wird das Lagerschild indirekt an den Stator fixiert.

Vorzugsweise besitzt das Gehäuse stirnseitig einen Zentrierabschnitt, der gegenüber dem restlichen Gehäuse senkrecht zur Achse des Rotors verschiebbar ist, und bei dem Fixieren des Lagerschilds wird der Zentrierabschnitt fest mit dem restlichen Gehäuse verbunden. Auf diese Weise kann beispielsweise ein ringförmiger Zentrierabschnitt an der Stirnseite eines Gehäuses verschiebbar angeordnet sein. Erst beim Fixieren werden die beiden Komponenten aneinander befestigt, beispielsweise durch Bolzen, Klebstoff oder andere Befestigungsmittel.

Alternativ kann das Gehäuse stirnseitig auch einen fest mit dem Gehäuse verbundenen Zentrierabschnitt aufweisen, wobei das Lagerschild an dem Zentrierabschnitt senkrecht zur Achse des Rotors verschiebbar ist, und bei dem Fixieren der Zentrierabschnitt fest mit dem Lagerschild verbunden wird. In diesem Fall ist also nicht der Zentrierabschnitt gegenüber dem Gehäuse, sondern das Lagerschild gegenüber dem Zentrierabschnitt verschiebbar. Dies kann beispielsweise dadurch realisiert werden, dass der Zentrierabschnitt eine gegebenenfalls eingeschränkte Fläche besitzt, auf der das Lagerschild bewegbar ist.

Speziell kann bei dem Regeln ein radiales Verschieben des Rotors gegenüber dem Stator um einen Wert stattfinden, der auf einen vorgegebenen Maximalwert begrenzt ist. Dies ist beispielsweise dann der Fall, wenn das axiale Verschieben des Lagerschilds oder des Zentrierabschnitts durch entsprechende Schultern am Gehäuse beziehungsweise am Zentrierabschnitt begrenzt ist. Dadurch kann beispielsweise verhindert werden, dass der Rotor beim Ausrichten in dem Stator an diesem angeht. So ist es besonders vorteilhaft, wenn der Rotor weniger als ein vorgegebener, nomineller Luftspalt zwischen Rotor und Stator in radialer Richtung verschiebbar ist.

Die Begrenzung der Verschiebbarkeit in radialer Richtung kann durch eine Regelung, aber auch durch eine geeignete hardwaremäßige Ausgestaltung der Komponenten realisiert werden. Insbesondere können die Komponenten, mit denen das Wälzlager an dem Gehäuse befestigt ist, geeignete Konturen aufweisen, welche ein solches Maximalspiel erlauben. Dadurch ist auch bei einem Versagen der Regelung sichergestellt, dass der Rotor den Stator nicht berührt.

Entsprechend der vorliegenden Erfindung ist zur Lösung obiger Aufgabe auch vorgesehen ein Montagesystem zum Montieren eines Rotors in einem Stator einer elektrischen Maschine, wobei der Rotor in mindestens einem Wälzlager gelagert ist, welches seinerseits an einem Lagerschild befestigt ist, umfassend
- eine magnetische Ausrichteinrichtung zum Lagern des Rotors,
- eine Ansteuereinrichtung zum Antreiben des Rotors durch den Stator,
- eine Sensoreinrichtung zum Detektieren von Schwingungen des Rotors in einem Betriebszustand, in dem der Rotor von dem Stator angetrieben ist, und
- eine Regelungsvorrichtung zum Regeln der Ausrichteinrichtung derart, dass die Schwingungen reduziert werden.

Das Montagesystem besitzt also neben der magnetischen Ausrichteinrichtung eine Ansteuereinrichtung, mit der die elektrische Maschine zur Rotation des Rotors angesteuert werden kann. Vorzugsweise sind mit der Ansteuereinrichtung derartige Ansteuersignale herstellbar, wie sie auch im Nominalbetrieb der elektrischen Maschine an dieser angelegt werden. Besonders vorteilhaft ist eine variable Ansteuereinrichtung, mit der eine Vielzahl an Ansteuersignalen für unterschiedlichste Arten von elektrischen Maschinen erzeugbar ist. Zur exakten Ausrichtung besitzt das Montagesystem eine Sensoreinrichtung, mit der die Schwingungen des Rotors der angetriebenen elektrischen Maschine detektierbar sind. Vorzugsweise ist diese Sensoreinrichtung fest mit der magnetischen Ausrichteinrichtung verbunden. Schließlich umfasst das Montagesystem eine Regelungsvorrichtung zum Regeln der Ausrichteinrichtung, wobei das Sensorsignal der Sensoreinrichtung für einen Regelkreis zur Reduzierung der Schwingungen dient. In einem beispielhaften Regelkreis befinden sich also die Ausrichteinrichtung (z.B. ein Elektromagnet), die Sensoreinrichtung (z.B. ein Schwingungsaufnehmer) und die Regelungsvorrichtung (z.B. ein Regler) sowie gegebenenfalls ein Leistungsverstärker.

Vorzugsweise besitzt die Ausrichteinrichtung eine erste Magnetlagereinrichtung und eine zweite Magnetlagereinrichtung, mit denen jeweils ein Ende einer Welle des Rotors radial lagerbar ist. Die Welle des Rotors kann somit zwischen die beiden Magnetlagereinrichtungen eingespannt werden. Auf diese Weise lässt sich der Rotor der elektrischen Maschine allein durch Magnetkräfte radial ausrichten.

Darüber hinaus kann die erste Magnetlagereinrichtung auch ein magnetisches Axiallager aufweisen. Hierdurch kann gewährleistet werden, dass der Rotor der elektrischen Maschine, wenn er ausschließlich durch die beiden Magnetlagereinrichtungen gelagert ist, auch in axialer Richtung stabilisiert ist.

Die oben im Zusammenhang mit dem erfindungsgemäßen Verfahren angeführten weiteren Merkmale können auch als funktionelle Merkmale des soeben beschriebenen Montagesystems interpretiert werden. Umgekehrt lassen sich die Vorrichtungsmerkmale des Montagesystems, soweit sie Funktionen betreffen, auch als Verfahrensmerkmale interpretieren.

Die vorliegende Erfindung wird nun anhand der beigefügten Zeichnungen näher erläutert, in denen zeigen:
- FIG 1: ein Schaubild zur Darstellung der radialen Kräfteverteilung in einer elektrischen Maschine mit Rotor und Stator;
- FIG 2: die elektrische Maschine von FIG 1 in einem kräftemäßig ausgewogenen Zustand;
- FIG 3: ein Ausführungsbeispiel eines erfindungsgemäßen Montagesystems mit eingespannter elektrischer Maschine; und
- FIG 4: ein prinzipielles Schaltungsdiagramm eines Regelkreises eines erfindungsgemäßen Montagesystems.

Die nachfolgend näher geschilderten Ausführungsbeispiele stellen bevorzugte Ausführungsformen der vorliegenden Erfindung dar. Dabei ist zu beachten, dass die einzelnen Merkmale nicht nur in den geschilderten Kombinationen, sondern auch in anderen technisch sinnvollen Kombinationen oder in Alleinstellung realisiert werden können.

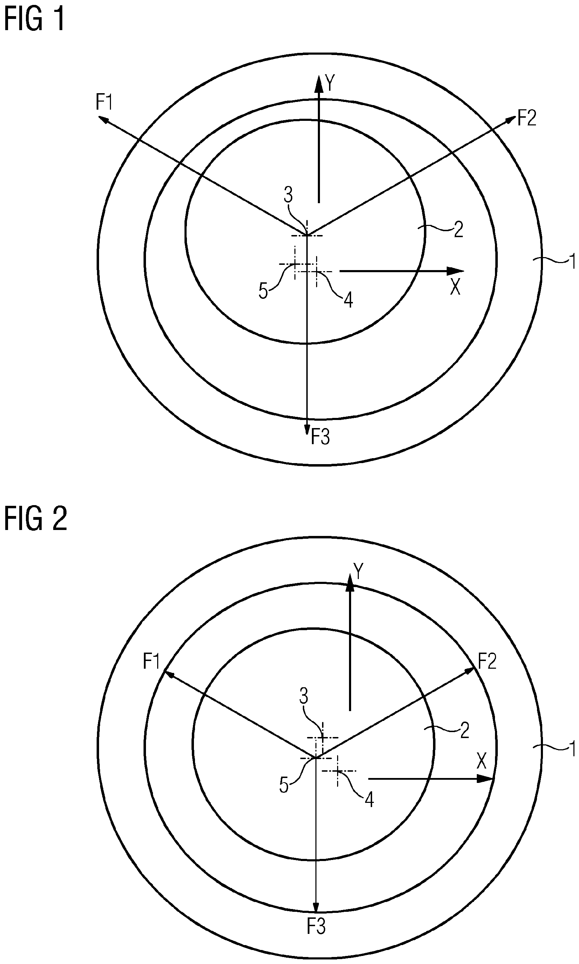

FIG 1 zeigt schemenhaft die Kräfteverteilung in einer elektrischen Maschine, die einen Stator 1 und einen Rotor 2 aufweist. Die Kräfteverteilung ist hier der Einfachheit halber lediglich in einer x-y-Ebene dargestellt, die sich senkrecht zur Achse des Rotors 2 erstreckt. Prinzipiell können sich natürlich auch Kräfte in z-Richtung ergeben, also senkrecht zu der x-y-Ebene. Diese werden hier in einer vereinfachten Ausführungsform jedoch nicht betrachtet.

Die Lage des Rotors 2 wird aus der Genauigkeit der Fertigung entsprechend einer Toleranzkette bestimmt. Der Luftspalt kann somit je nach Motorgröße erheblich schwanken. Typischerweise kann der Luftspalt bei einer Maschine mit einer Achshöhe von 180mm bis zu 0,25mm schwanken. Bisher bestand das Ziel darin, durch möglichst hohe Fertigungsgenauigkeiten die Position der Rotorachse 3, die sich aus den fertigungstechnischen Abmessungen ergibt, möglichst nahe an die ideale geometrische Rotorachse 4 zu bringen. Dies ist mit hohem Aufwand verbunden und je nach Zusammenfallen der Toleranzen immer noch mit hoher Ungenauigkeit behaftet. Auch können nicht alle beeinflussten Geometrien berücksichtigt werden, wie zum Beispiel der Nutgrund des Statorblechs. Zudem sind die Materialeigenschaften, die innerhalb des magnetischen Kreises ihre Wirksamkeit entfalten, nicht berücksichtigt. Gerade diese materialspezifischen Unsymmetrien wirken sich jedoch erheblich in der Anregung aus. Es ergeben sich dann beispielsweise in Umfangrichtung gleich verteilt die drei Kräfte-Vektoren F1, F2, F3 ausgehend von der geometrischen Achse 3 mit unterschiedlichem Betrag. Daher ist es Ziel, Unsymmetrien, die sich aus unterschiedlichen Kräften ergeben, so weit wie möglich zu reduzieren, um daraus resultierende Schwingungen ebenfalls zu reduzieren.

Hierzu wird gemäß der FIG 2 bei der Rotormontage nicht nach der sich ergebenden fertigungstechnischen Rotorachse 3 oder der idealen geometrischen Rotorachse 4 ausgerichtet, sondern (auch) nach einer elektromagnetisch wirkenden Rotorachse 5. Dabei wird die elektrische Maschine, zum Beispiel der Motor, während der Rotormontage z.B. durch eine Ansteuereinrichtung elektrisch betrieben. Die mechanischen Rotorlager sind noch nicht fest mit dem Stator 1 verbunden. In einem konkreten Beispiel sind also die Lagerschilde noch nicht fest am Gehäuse montiert. Mittels einer Ausrichteinrichtung, in der der Rotor der elektrischen Maschine für die Montage gelagert ist, wird der Rotor so ausgerichtet, dass die auf den Rotor wirkenden Kräfte einander so weit wie möglich aufheben. Dies ist beispielsweise dann der Fall, wenn wie in FIG 2 die am Umfang gleich verteilten Kräfte-Vektoren F1, F2, F3, die auf den Rotor 2 wirken, gleich lang sind. Bei Betrieb des Rotors ist es dann unter Umständen günstig, die Ausrichtung der Achse des Rotors 2 entsprechend einer sogenannten "elektromagnetisch wirkenden Rotorachse" 5 durchzuführen. Bei einer solchen Ausrichtung ergeben sich für die vorbestimmte Betriebsart eine Symmetrie der Kräfte und damit eine möglichst vollständige Reduktion der Schwingungen.

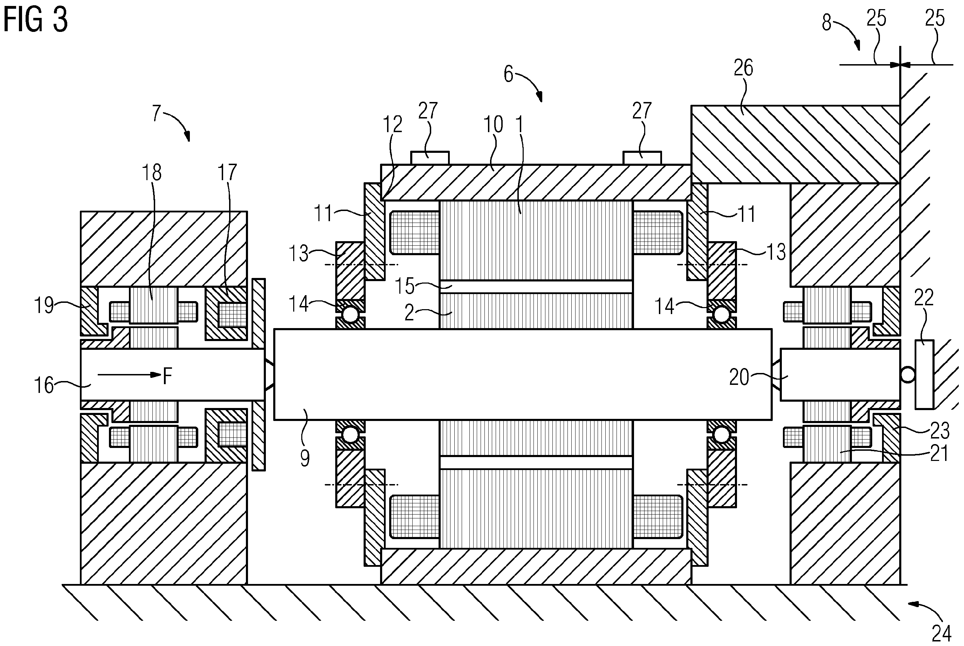

FIG 3 gibt ein beispielhaftes Montagesystem wieder, in das eine elektrische Maschine, zum Beispiel ein Motor 6 eingespannt ist. Das Montagesystem besitzt hier zwei Magnetlagereinrichtungen 7 und 8, zwischen denen eine Welle 9 des Rotors 2 gelagert ist.

Die elektrische Maschine beziehungsweise der Motor 6 besitzt im gewählten Beispiel ein Gehäuse 10, das mit dem Stator 1 fest verbunden ist. Stirnseitig besitzt das Gehäuse 10 an beiden Seiten jeweils einen Zentrierabschnitt 11, der ringförmig ausgebildet ist. Der Zentrierabschnitt 11 besitzt eine Schulter 12, mit der er zentrisch an dem restlichen Gehäuse, hier einem zylindermantelförmigen Gehäuseabschnitt verbunden werden kann. An jedem Zentrierabschnitt 11 wird jeweils ein Lagerschild 13 beispielsweise mittels Bolzen befestigt. An jedem Lagerschild wiederum ist ein Lager 14 befestigt, welches die Welle 9 trägt.

Vor der Montage ist gemäß einer Ausführungsform beispielsweise das Lagerschild 13 nicht fest mit dem Zentrierabschnitt 12 verbunden. Dies bedeutet, dass der Rotor 2 nicht fest mit dem Stator 1 verbunden ist. Vielmehr ist der Luftspalt 15 somit variabel.

In dem Beispiel von FIG 3 besitzt das Montagesystem die beiden Magnetlagereinrichtungen 7 und 8. In einer vereinfachten Ausgestaltung könnte das Montagesystem aber auch nur eine einzige Magnetlagereinrichtung besitzen, und die elektrische Maschine wird für die Montage zunächst an einer Seite ausgerichtet, dann umgedreht und an der anderen Seite ausgerichtet.

Die in dem Beispiel von FIG 3 links dargestellte Magnetlagereinrichtung 7 besitzt einen Rotor 16, der als Aufnahme für die Rotorwelle 9 der elektrischen Maschine beziehungsweise des Motors 6 dient. Beispielsweise wird hierzu eine axiale Kraft F von dem Rotor 16 auf die Welle 9 ausgeübt. Dazu eignet sich ein axiales Magnetlager 17, von dem eine Scheibe unmittelbar an dem Rotor 16 befestigt ist. Ein Elektromagnet des Axiallagers 17 kann beispielsweise die Scheibe in z-Richtung auf die Stirnseite der Welle 9 drücken.

Die Magnetlagereinrichtung 7 besitzt außerdem ein magnetisches Radiallager 18, mit dem der Rotor 16 radial gelagert wird. Das Radialmagnetlager 18 wird beispielsweise von einer Ansteuereinrichtung so angesteuert, dass der Rotor 16 zusammen mit der Welle 9 auch während des Betriebs der elektrischen Maschine, d.h. während der Rotation des Rotors 2 schwimmend gelagert ist. Ein Sensor 19 der Magnetlagereinrichtung 7 kann dabei Schwingungen des Rotors 16 der Magnetlagereinrichtung 7 und damit des Rotors 2 der elektrischen Maschine registrieren.

In ähnlicher Weise ist die Magnetlagereinrichtung 8 auf der rechten Seite des Montagesystems aufgebaut. Es besitzt einen Rotor 20, der in einem magnetischen Radiallager 21 gelagert ist. Auf ein variables Axiallager ist hier verzichtet. In z-Richtung, d.h. in axialer Richtung ist der Rotor durch eine entsprechende Abstützung 22 axial fixiert. Darüber hinaus besitzt die zweite Magnetlagereinrichtung 8 ebenfalls einen Sensor 23 zur Erfassung von Schwingungen des Rotors 20.

Die beiden Magnetlagereinrichtungen 7 und 8 sind beispielsweise durch eine Halterung 24 relativ zueinander fixiert. Diese Halterung 24 kann auch dafür sorgen, dass die z-Achse fixiert ist, was die Pfeile 25 andeuten. Außerdem kann ein Anschlag 26 vorgesehen sein, um das Gehäuse 10 der elektrischen Maschine axial zu positionieren, sofern es nicht ausreichend auf der Halterung 24 abgestützt ist.

Um nicht nur Schwingungen der Welle 9 des Rotors 2 aufzunehmen, sondern auch solche beispielsweise des Gehäuses 10, können weitere Schwingungssensoren an der elektrischen Maschine vorgesehen sein. Beispielsweise werden eine oder mehrere Schwingungssensoren 27 an dem Gehäuse 10 angeordnet, um etwaige Schwingungen des Gehäuses 10 unmittelbar zu erfassen.

Vor dem Ausrichten des Rotors 2 in dem Stator 1 ist also der Rotor 2 mit dem Stator 1 noch nicht fest verbunden. Es ist beispielsweise das Lagerschild 13 noch nicht an der Zentrierung 11 und/oder die Zentrierung 11 noch nicht an dem restlichen Gehäuse 10 fixiert. In diesem Zustand ist der Rotor 2 nur durch die Ausrichteinrichtung (hier die beiden Magnetlagereinrichtungen 7 und 8) gelagert. Der Rotor wird nun für die Montage elektrisch betrieben, und zwar vorzugsweise so, wie er im späteren Normalbetrieb auch betrieben wird. So kann gewährleistet werden, dass während des Normalbetriebs möglichst wenige Schwingungen auftreten. Die elektrische Maschine wird also beispielsweise mit einer bestimmten Frequenz oder mit einer bestimmten Signalform angesteuert. An den beiden Motorlagerungen 7 und 8 werden die vorzugsweise nur radial ausgerichteten, unterschiedlich großen Kräfte gegebenenfalls in alle Richtungen (360 Grad) erfasst. Durch die Ausrichteinrichtung (hier die Magnetlagereinrichtungen 7 und 8) wird der Rotor in Abhängigkeit von den gemessenen Kräften in x- und y-Richtung verschoben, bis die wirkenden Kräfte in allen Richtungen nahezu gleich groß sind. In einer spezifischen Ausführungsform können die Schwingungen direkt oder indirekt durch Kraftmessungen detektiert werden.

Um eine Verschiebung der Rotorachse zu ermöglichen, sollten also keine Zentrierungen am Lagerschild vorgesehen sein, oder die Zentrierungen am Lagerschild werden mit einem Freiheitsgrad in x- und y-Richtung ausgestattet. Wie in dem Beispiel von FIG 3 kann der Zentrierabschnitt 11 gegenüber dem Lagerschild 13 eine ebene Fläche darstellen, auf der das Lagerschild verschiebbar ist. Der Zentrierabschnitt 11 ist hier lediglich gegenüber dem restlichen Gehäuse zentriert. Die Verschiebemöglichkeit kann jedoch sowohl an der Zentrierung am Lagerschild zum Gehäuse vorgesehen werden, als auch an einem separaten Nabenbauteil (in FIG 3 der Zentrierabschnitt 11) am Lagerschild 13.

Vorzugsweise wird die Größe des Freiheitsgrads für das Verschieben der Rotorachse abhängig vom gewünschten Luftspalt festgelegt. So kann die maximale zulässige radiale Verschiebung einer Differenz zwischen dem Luftspaltmaß minus 0,2mm entsprechen. Günstigerweise ist auch der Freiheitsgrad der Verschiebung im Zentrierrand (vergleiche Schulter 12) auch kleiner als der Luftspalt der Ausrichteinheit (Magnetlagerung). Somit kann der Rotor in Drehung versetzt werden, ohne dass eine Berührung in der Ausrichteinheit erfolgt.

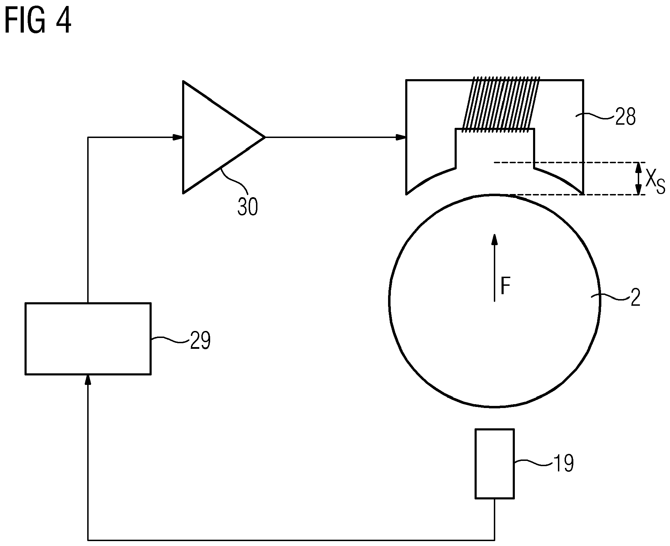

Zum Ausrichten wird die Ausrichteinrichtung durch eine Regelungseinrichtung geregelt. Ein entsprechender Regelkreis ist in FIG 4 symbolisch dargestellt. Die Ausrichteinrichtung besitzt einen Elektromagneten 28, der auf den Rotor 2 einwirkt. Entsprechend wird beispielsweise die x-Position des Rotors 2 verändert, was in FIG 4 mit der Distanz xₛ angedeutet ist. Der Elektromagnet 28 ist beispielsweise Teil des magnetischen Radiallagers 18. Der Schwingungssensor 19 oder alternativ ein Sensor zur Kraftmessung nimmt Schwingungen oder Kräfte des Rotors 2 auf und liefert ein entsprechendes Messsignal an einen Regler 29. Dieser liefert eine entsprechende Stellgröße beispielsweise über einen Leistungsverstärker 30 an den Elektromagneten 28. Mit einer solchen Rückkopplung ist eine Ausrichtung des Rotors derart möglich, dass Schwingungen und Geräusche reduziert und gegebenenfalls sogar eliminiert werden können. Um selbst die Gehäuseeigenschaften im System zu berücksichtigen, können zusätzlich die Schwingungsaufnehmer 27 am Gehäuse 10 in den Regelkreis aufgenommen werden. Damit könnte eine Feinstausrichtung des Rotors 2 ermöglicht werden.

Am Ende des Ausrichtvorgangs, wenn also die (ideale) elektromagnetische Position des Rotors festgestellt wurde, können die Lagerschilde 13 und/oder die Zentrierabschnitte 11 am Gehäuse 10 beziehungsweise Stator 1 fixiert werden. Damit befindet sich der Rotor 2 in einer festen örtlichen Lage zum Stator 1. Schwingungen und Geräusche der elektrischen Maschine sind so in dem vorgesehenen Normalbetrieb reduziert.

In vorteilhafter Weise kann so ein kleinerer Luftspalt zwischen Rotor und Stator vorgesehen werden, wodurch sich eine Effizienzsteigerung ergibt. Darüber hinaus können Motoren insbesondere in der relativ sensiblen Reluktanztechnik geräuschreduziert hergestellt werden.

## Patentansprüche

1. Verfahren zum Montieren eines Rotors (2) in einem Stator (1) einer elektrischen Maschine, wobei der Rotor in mindestens einem Wälzlager (14) gelagert ist, welches seinerseits an einem Lagerschild (13) befestigt ist,
**gekennzeichnet durch**
- Lagern des Rotors (2) in einer magnetischen Ausrichteinrichtung, während das Lagerschild (13) lose gegenüber dem Stator (1) ist,
- Antreiben des Rotors (2) durch den Stator (1),
- Detektieren von ersten Schwingungen des Rotors (2),
- Regeln der Ausrichteinrichtung derart, dass die ersten Schwingungen reduziert werden, und
- Fixieren des Lagerschilds (13) an dem Stator (1) in einer durch das Regeln ermittelten Position.

2. Verfahren nach Anspruch 1, wobei zweite Schwingungen eines Gehäuses (10) der elektrischen Maschine detektiert werden, die ebenfalls bei dem Regeln der Ausrichteinrichtung berücksichtigt werden.

3. Verfahren nach Anspruch 1 oder 2, wobei das Lagerschild (13) über ein Gehäuse der elektrischen Maschine an dem Stator (1) fixiert wird.

4. Verfahren nach Anspruch 3, wobei das Gehäuse (10) stirnseitig einen Zentrierabschnitt (11) aufweist, der gegenüber dem restlichen Gehäuse (10) senkrecht zur Achse des Rotors (2) verschiebbar ist, und bei dem Fixieren der Zentrierabschnitt fest mit dem restlichen Gehäuse (10) verbunden wird.

5. Verfahren nach Anspruch 3, wobei das Gehäuse (10) stirnseitig einen fest mit dem Gehäuse verbundenen Zentrierabschnitt (11) aufweist, das Lagerschild (13) an dem Zentrierabschnitt (11) senkrecht zur Achse des Rotors (2) verschiebbar ist, und bei dem Fixieren der Zentrierabschnitt (11) fest mit dem Lagerschild (13) verbunden wird.

6. Verfahren nach einem der vorhergehenden Ansprüche, wobei bei dem Regeln ein radiales Verschieben des Rotors (2) gegenüber dem Stator (1) um einen Wert stattfindet, der auf einen vorgegebenen Maximalwert begrenzt ist.

7. Verfahren nach einem der Ansprüche 3 bis 6, wobei die radiale Verschiebbarkeit des Rotors (2) gegenüber dem Stator (1) durch ein vorgegebenes Maximalspiel des Lagerschilds (13) gegenüber dem Gehäuse (10) begrenzt wird.

8. Montagesystem zum Montieren eines Rotors (2) in einem Stator (1) einer elektrischen Maschine, wobei der Rotor (2) in mindestens einem Wälzlager gelagert ist, welches seinerseits an einem Lagerschild (13) befestigt ist,
**gekennzeichnet durch**
- eine magnetische Ausrichteinrichtung zum Lagern des Rotors (2),
- eine Ansteuereinrichtung zum Antreiben des Rotors (2) durch den Stator (1),
- eine Sensoreinrichtung zum Detektieren von Schwingungen des Rotors (2) in einem Betriebszustand, in dem der Rotor (2) von dem Stator (1) angetrieben ist, und
- eine Regelungsvorrichtung zum Regeln der Ausrichteinrichtung derart, dass die Schwingungen reduziert werden.

9. Montagesystem nach Anspruch 8, wobei die Ausrichteinrichtung eine erste Magnetlagereinrichtung (7, 8) und eine zweite Magnetlagereinrichtung (7,8) aufweist, mit denen jeweils ein Ende einer Welle (9) des Rotors (2) radial lagerbar ist.

10. Montagesystem nach Anspruch 9, wobei die erste Magnetlagereinrichtung (7,8) ein magnetisches Axiallager (17) aufweist.

## Claims

1. Method for mounting a rotor (2) in a stator (1) of an electrical machine, wherein the rotor is mounted in at least one rolling bearing (14) which in turn is fastened to a bearing shield (13),
**characterised by**
- mounting the rotor (2) in a magnetic alignment device while the bearing shield (13) is loose relative to the stator (1),
- driving the rotor (2) by means of the stator (1),
- detecting first vibrations of the rotor (2),
- controlling the alignment device such that the first vibrations are reduced, and
- fixing the bearing shield (13) to the stator (1) in a position determined by the controlling.

2. Method according to claim 1, wherein second vibrations of a housing (10) of the electrical machine are detected, said second vibrations also being taken into account when controlling the alignment device.

3. Method according to claim 1 or 2, wherein the bearing shield (13) is fixed to the stator (1) via a housing of the electrical machine.

4. Method according to claim 3, wherein on the front face the housing (10) has a centring portion (11) which is displaceable relative to the remaining housing (10) perpendicular to the axis of the rotor (2) and during the fixing the centring portion is fixedly connected to the remaining housing (10).

5. Method according to claim 3, wherein on the front face the housing (10) has a centring portion (11) fixedly connected to the housing, the bearing shield (13) is displaceable on the centring portion (11) perpendicular to the axis of the rotor (2) and during the fixing the centring portion (11) is fixedly connected to the bearing shield (13).

6. Method according to one of the preceding claims, wherein a radial displacement of the rotor (2) relative to the stator (1) takes place during the controlling by a value which is limited to a predetermined maximum value.

7. Method according to one of claims 3 to 6, wherein the radial displaceability of the rotor (2) relative to the stator (1) is limited by a predetermined maximum clearance of the bearing shield (13) relative to the housing (10).

8. Mounting system for mounting a rotor (2) in a stator (1) of an electrical machine, wherein the rotor (2) is mounted in at least one rolling bearing, which in turn is fastened to a bearing shield (13),
**characterised by**
- a magnetic alignment device for mounting the rotor (2),
- an activation device for activating the rotor (2) by the stator (1),
- a sensor device for detecting vibrations of the rotor (2) in an operating state in which the rotor (2) is driven by the stator (1) and
- a control device for controlling the alignment device such that the vibrations are reduced.

9. Mounting system according to claim 8, wherein the alignment device comprises a first magnetic bearing device (7, 8) and a second magnetic bearing device (7, 8), in each case one end of a shaft (9) of the rotor (2) being able to be radially mounted thereby.

10. Mounting system according to claim 9, wherein the first magnetic bearing device (7, 8) has a magnetic axial bearing (17).

## Revendications

1. Procédé de montage d'un rotor (2) dans un stator (1) d'une machine électrique, le rotor étant monté dans au moins un palier (14) à roulement, fixé pour sa part à un flasque (13),
**caractérisé par**
- le montage du rotor (2) dans un dispositif magnétique d'alignement, tandis que le flasque (13) est libre par rapport au stator (1),
- l'entraînement du rotor (2) par le stator (1),
- la détection de premières oscillations du rotor (2),
- le réglage de la direction d'alignement, de manière à réduire les premières oscillations et
- l'immobilisation du flasque (13) sur le stator (1) en une position déterminée par le réglage.

2. Procédé suivant la revendication 1, dans lequel on détecte des deuxièmes oscillations d'une carcasse (10) de la machine électrique, dont on tient compte également lors du réglage de la direction d'alignement.

3. Procédé suivant la revendication 1 ou 2, dans lequel on immobilise le flasque (13) sur le stator (1) par une carcasse de la machine électrique.

4. Procédé suivant la revendication 3, dans lequel la carcasse (10) a, du côté frontal, une partie (11) de centrage, qui peut, par rapport au reste de la carcasse (10), coulisser perpendiculairement à l'axe du rotor (2) et, lors de l'immobilisation, on relie la partie de centrage fixement au reste de la carcasse (10).

5. Procédé suivant la revendication 3, dans lequel la carcasse (10) a, du côté frontal, une partie (11) de centrage reliée fixement à la carcasse, le flasque (13) peut coulisser sur la partie (11) de centrage perpendiculairement à l'axe du rotor (2) et, lors de l'immobilisation, on relie la partie (11) de centrage fixement au flasque (13).

6. Procédé suivant l'une des revendications précédentes, dans lequel, lors du réglage, a lieu un déplacement radial du rotor (2) par rapport au stator (3), d'une valeur qui est limitée à une valeur maximum donnée à l'avance.

7. Procédé suivant l'une des revendications 3 à 6, dans lequel la possibilité de déplacement radial du rotor (2), par rapport au stator (1), est limitée par un jeu maximum donné à l'avance du flasque (13), par rapport à la carcasse (10).

8. Système de montage pour monter un rotor (2) dans un stator (1) d'une machine électrique, le rotor (2) étant monté dans au moins un palier à roulement, qui, pour sa part, est fixé à un flasque (13),
**caractérisé par**
- un dispositif magnétique d'alignement pour monter le rotor (2),
- un dispositif de commande pour entraîner le rotor (2) par un stator (1),
- un dispositif de capteur pour détecter des oscillations du rotor (2) dans un état de fonctionnement dans lequel le rotor (2) est entraîné par le stator (1) et
- un dispositif de réglage pour régler la direction d'alignement, de manière à réduire les oscillations.

9. Système de montage suivant la revendication 8, dans lequel le dispositif d'alignement a un premier dispositif (7, 8) de palier magnétique et un deuxième dispositif (7, 8) de palier magnétique, par lesquels respectivement le bout d'un arbre (9) du rotor (2) peut être supporté radialement.

10. Système de montage suivant la revendication 9, dans lequel le premier dispositif (7, 8) de palier magnétique a un palier (17) magnétique axial.
